# EUROPEAN PATENT APPLICATION

(11) **EP 2 733 557 A2**
(43) Date of publication of application: **21.05.2014**
(21) Application number: 13184630.5
(22) Date of filing: 16.09.2013
(51) Int. Cl.: G05B 19/409

(54) **Programmable display device and control system**

(30) Priority: 16.11.2012 JP 2012252446
(71) Applicant: Digital Electronics Corporation, Osaka-shi, Osaka 559-0031 (JP)
(72) Inventor: Ikezeo, Takeshi, OSAKA, 559-0031 (JP)
(74) Representative: Cabinet Plasseraud

(57) **Abstract**

A programmable display device includes a state monitoring section for monitoring a state of a preregistered variable. Data of an image to be displayed by the programmable display device contains (i) a plurality of unit objects and (ii) a master object that collectively controls the plurality of unit objects. The master object has a change determining section and a display switching section. The change determining section notifies the display switching section that the preregistered variable monitored by the state monitoring section has been changed so as to be in a state within a particular range. Upon receipt of the notification, the display switching section switches one of the plurality of unit objects, which are being displayed, with another unit object, and then displays the another unit object.

## Description

### Technical Field

The present invention relates to (i) a programmable display device for displaying an image such that objects included in the image are switched between in a dynamic manner and (ii) a control system.

### Background Art

A programmable display device includes: a display section for displaying an image; a touch panel for touch input; an interface for communication with devices to which the programmable display device is to be connected; and a control section for controlling each of the above members. Such a programmable display device is a manipulable display device having such functions as (i) showing, on an image being displayed on a display section, a working state of devices and (ii) receiving, via a touch panel on the display section, operation inputs for giving instructions as to controlling of the devices.

Since a programmable display device in general has a graphic display function, the programmable display device is capable of displaying a switch, an indicator lamp, a meter, and the like on a prearranged image. Thus, the programmable display device serves as a manipulation device in a control system. In a control system, it is a programmable display device provided in the vicinity of devices that is used for (i) displaying respective working states of the devices and (ii) giving instructions as to controlling of the devices.

Components, such as a switch, presented on an image are handled as objects which are each assigned a predetermined operation process. For example, Patent Literature 1 discloses development of a visual program, which development is carried out by representing how program components are connected to one another. Patent Literature 2 discloses assignment of behavioral programs to respective graphic components which are parts of a graphic display.

Such a programmable display device is used in various environments and conditions, and is therefore likely to display an image so that objects are switched between as a result of particular states of variables being recognized which variables are reflecting such environments and conditions. A variable herein refers to a factor that is subject to some type of change, and (i) is a factor that is varied by internal or external cause (e.g. data generated by a user's operation) or (ii) is by definition a factor that varies (e.g. time). Examples of a variable encompass various data to be obtained from various devices (i.e. target devices).

A programmable display device also displays an image so that objects are enlarged or reduced in size for particular purposes.

For example, Patent Literature 3 discloses a technology in which a malfunctioning part is enlarged on an image for monitoring and controlling building equipment. Patent Literature 4 discloses a technology for displaying an image presenting operation states of devices that constitute a plant so that, in a case where a malfunction occurs in a device, malfunction information and information on an enlarged malfunctioning part are displayed.

### Citation List

### Patent Literatures

Patent Literature 1
   Japanese Patent Application Publication, Tokukaihei, No. 9-190342 A (Publication Date: July 22, 1997)
Patent Literature 2
   Japanese Patent Application Publication, Tokukaihei, No. 11-242590 A (Publication Date: September 7, 1999)
Patent Literature 3
   Japanese Patent Application Publication, Tokukaihei, No. 7-129679 A (Publication Date: May 19, 1995)
Patent Literature 4
   Japanese Patent Application Publication, Tokukaihei, No. 8-44424 A (Publication Date: February 16, 1996)

### Summary of Invention

### Technical Problem

In order for a conventional programmable display device to switch between objects according to varying states of a variable, (i) objects corresponding to the respective states of the variable are prepared in advance and (ii) displayed/hidden states of the objects are switched between, according to the states of the variable.

For example, in a case where an object A or an object B is intended to be displayed when a variable is in a state A or in a state B, respectively, it was conventionally required to prepare a program that causes (i) the state A to result in displaying of the object A and hiding of the object B and (ii) the state B to result in hiding of the object A and displaying of the object B.

While the conventional programmable display device is thus capable of dynamic display changes corresponding to the varying states of the variable, (i) settings made by use of the above program becomes increasingly complex as the number of states of the variable becomes larger and (ii) settings as to displaying/hiding switching of objects need to be changed each time an extra state of the variable is added. This unfortunately makes it impossible to easily make use of the dynamic display changes corresponding to the varying states of the variable.

According to a conventional programmable display device, an object is enlarged/reduced by (i) preparing, in advance, objects having respective sizes corresponding to respective magnifications and (ii) switching between displaying/hiding states of the objects, depending on whether or not a variable is in a particular state.

For example, in a case where a non-enlarged object A or an enlarged object B is intended to be displayed when a variable is in a state A or in a state B, respectively, it was required to prepare a program with which (i) the state A results in displaying of the object A and hiding of the object B and (ii) the state B results in hiding of the object A and displaying of the object B.

While the conventional programmable display devices are thus capable of dynamic enlargement or dynamic size reduction of objects in accordance with varying states of the variable, (i) settings made by use of the above program becomes increasingly complex as the number of states of the variable becomes large and (ii) settings as to switching between displaying/hiding of objects need to be changed each time an extra state of the variable is added. This unfortunately makes it impossible to easily make use of the dynamic changes in enlargement/reduction of the objects in accordance with the varying states of the variable.

The present invention has been made in view of the foregoing problems, and it is an object of the present invention to enable a programmable display device to easily carry out dynamic changes in displayed objects in accordance with a state of a variable.

### Solution to Problem

In order to attain the object, a programmable display device in accordance with an embodiment of the present invention includes: a storing section for storing therein image data which contains (i) a plurality of unit objects each of which has a particular function and (ii) a master object for collectively controlling the plurality of unit objects; and a state monitoring section for monitoring a change in a variable which is preregistered, the master object including: a registration requesting section for requesting the state monitoring section to register a variable to be monitored; a change determining section for determining whether or not a variable monitored by the state monitoring section has changed to be in a state falling within a particular range; and a display switching section for switching, when the change determining section determines that the variable has changed to be in the state falling within the particular range, a displayed unit object from one of the plurality of unit objects which is being displayed to another one of the plurality of unit objects that is associated with the state falling within the particular range.

### Advantageous Effects of Invention

According to an embodiment of the present invention, a master object, when a variable is in a particular state, (i) switches from one of a plurality of unit objects to another one of the plurality of unit objects and then (ii) displays the another one of the plurality of unit objects. This allows a programmable display device to easily carry out dynamic changes in objects in accordance with states of a variable.

### Brief Description of Drawings

Fig. 1 is a block diagram illustrating a configuration of a control system in accordance with Embodiment 1 of the present invention.
Fig. 2 is a diagram illustrating a relationship between (i) a state monitoring section provided in a programmable display device in the control system and (ii) a master object included in data of an image to be displayed on the programmable display device.
Fig. 3 is a view illustrating an image presenting a layout of a production line.
Fig. 4 is a view illustrating part of the image being enlarged to such a degree that an alarm display representation is displayed.
   (a) of Fig. 5 is a view illustrating an image presenting an entire layout of plant equipment.
   (b) of Fig. 5 is a view illustrating a state in which part of the image has been enlarged.
   (c) of Fig. 5 is a view illustrating a state in which part of the image illustrated in (b) of Fig. 5 has been further enlarged.
   (a) through (d) of Fig. 6 are views each illustrating an image showing a work progress in a process for manufacturing an automobile.

### Description of Embodiments

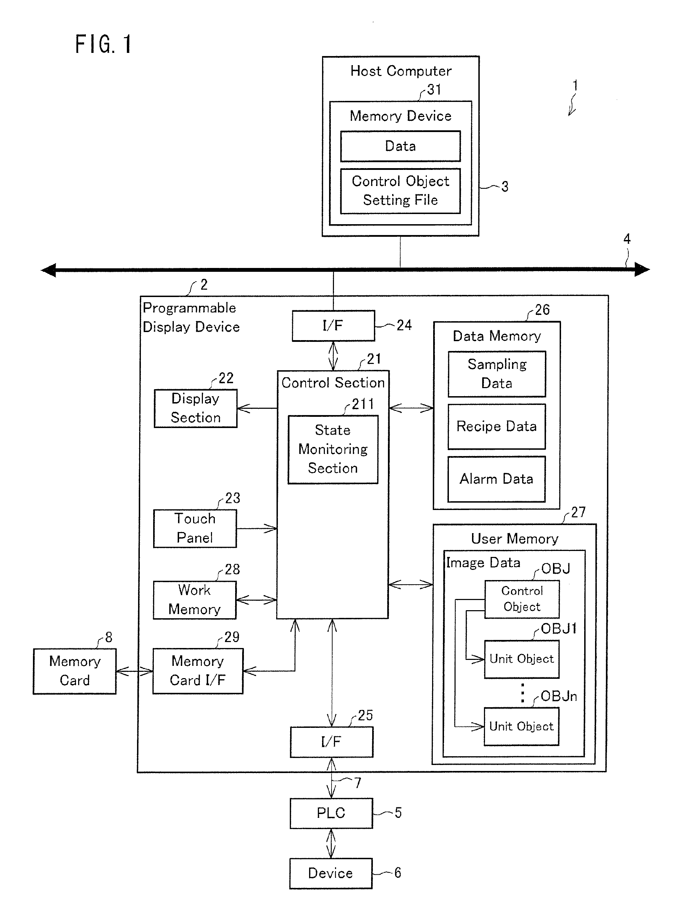

The following description will discuss Embodiment 1 of the present invention with reference to Figs. 1 through 6.

Fig. 1 is a block diagram illustrating a configuration of a control system 1 in accordance with Embodiment 1.

As illustrated in Fig. 1, the control system 1 in accordance with Embodiment 1 includes a programmable display device 2, a host computer 3, a network 4, a programmable logic controller 5 (hereinafter referred to as a PLC 5), and a device 6.

The programmable display device 2 is connected to the host computer 3 via the network 4. The network 4 is a type of communication network that encompasses (i) a local area network (LAN) employing a technology such as Ethernet (registered trademark) which is capable of communication by use of a compatible communications protocol and (ii) the Internet.

The host computer 3 manages (i) control data (recipe data) to be sent to the PLC 5 and (ii) various types of data obtained from the programmable display device 2. The host computer 3 thus plays a central role of a control function of the control system 1. The host computer 3 transmits recipe data to the programmable display device 2, and receives, from the programmable display device 2, various data collected and stored in the programmable display device 2. Examples of the various types of data supplied from the programmable display device 2 encompass alarm data and sampling data. Such data will be described later in detail.

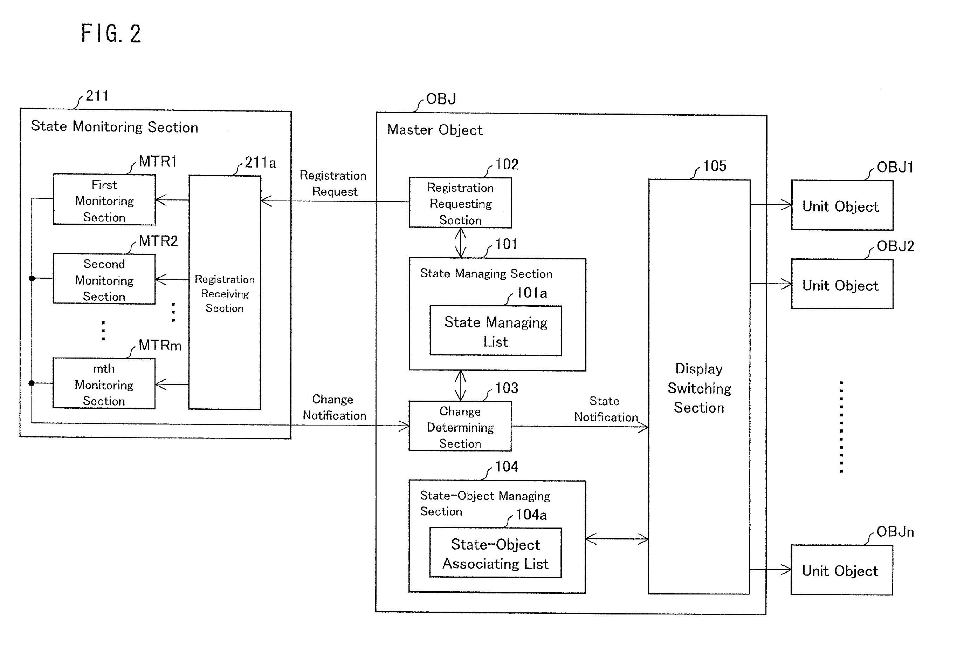

The host computer 3 has a memory device 31, such as a hard disk, in which such data as that described above is stored. The memory device 31 also stores therein a master object setting file. The master object setting file regulates an operation carried out by a master object OBJ (see Fig. 2) that will be described later.

The PLC 5 (external device) (i) captures, via an input unit, a state of a source device 6, from which data is supplied, and (ii) gives a control command to a destination device 6, to which data is supplied, via an output unit. The PLC 5 carries out, in accordance with a sequence program (ladder program) written by a user, such operations at each predetermined scanning time such as every dozens of micro seconds, for example.

Examples of the source device 6 encompass sensors (such as a thermo sensor, a photosensor, and the like) and switches (such as a push-button switch, a limit switch, a pressure switch, and the like). Examples of the destination device 6 encompass an actuator, a relay, a solenoid valve, and a display device. Such devices 6 (i) are provided at required sections in a target system of various kinds such as a production line and (ii) constitute the control system 1.

The PLC 5 has a memory (device memory) that stores, in regions thereof specified by device addresses, data (e.g. word data, bit data) indicative of the states of the devices 6 (an output value supplied from the device 6 and an input value supplied to the device 6). In the memory, a word device and a bit device are configured. The word device is (a) configured as a region in which word data such as data inputted and outputted as numerical values is stored and (b) specified by a word address (device address). The bit device is (a) configured as a region in which bit data such as data indicative of on/off states is stored and (b) specified by a bit address (device address). This makes it possible to access a desired word device or bit device in the memory by specifying a device address, so that it is possible to control a corresponding device 6 and to individually extract data on a state of the corresponding device 6.

The programmable display device 2 also can be provided with a storage region similar to the device memory. Such a storage region can be, for example, a particular region in a data memory 26 for storing data inputted by a user via a touch panel 23 (described later).

The programmable display device 2 includes a CPU (Central Processing Unit) which executes a command in an HMI control program (control program) realizing functions, a ROM (Read-Only Memory) in which the HMI control program is stored, a RAM (Random-Access Memory) to which the HMI control program is loaded, and a storage device which is realized by a memory or the like and in which various types of data are stored.

The programmable display device 2 is (i) a dedicated-purpose computer achieving unique operation and display functions by displaying image data for an input operation and for a display operation and (ii) suitable as an HMI device. The image data contains process-specifying information for specifying various types of processing related to an input operation and a display operation. Based on such image data, the programmable display device is capable of specifying (i) an operation to display a state of each device 6 and (ii) an operation to control the state of each device 6 in accordance with the input operation.

The programmable display device 2 uses its communication function to communicate with the PLC 5 via a communication cable 7 so as to acquire a state of each device 6 stored in the memory of the PLC 5. The programmable display device 2 then displays, on its display section 22 (described later), the state of each device 6, for example. The programmable display device 2 uses its communication function also to transmit, in accordance with the input operation via the touch panel 23, a control command etc. to the PLC 5. Since the programmable display device 2 is communicably connected also to the host computer 3 via the network 4, the programmable display device 2 uses its communication function also to exchange data with the host computer 3.

Note that an instruction to obtain/change a state of each device 6 can be given each time there arises a need for such an action. Alternatively, it is also possible to (i) prepare a temporary memory space in the programmable display device 2 so that, when a state of each device 6 is obtained/changed, (a) the temporary memory space is accessed as well as (b) a predetermined PLC 5 is accessed a predetermined amount of time after the access to the temporary memory space or (ii) communicate with the PLC 5 each time a prearranged event takes place, so as to be synchronized with the actual regions in the PLC 5 to which respective addresses are assigned.

In order to achieve the above functions, the programmable display device 2 includes a control section 21, the display section 22, the touch panel 23, interfaces (shown as I/F in Fig. 1) 24 and 25, the data memory 26, a user memory 27, a work memory 28, and a memory card interface (shown as memory card I/F in Fig. 1) 29. Main components of the programmable display device 2 will be described in detail below.

For configuring the programmable display device 2 to be thin, a flat display panel such as a liquid crystal display panel, an EL panel, or a plasma display panel is suitably used as the display section 22. The touch panel 23 is an input device provided to allow for touch input on a display surface of the display section 22.

The interface 24 is a component for controlling communications between the programmable display device 2 and the host computer 3, and is connected to the network 4. The interface 24 is configured to be capable of network communication based on an IP address of the host computer 3.

On the other hand, the interface 25 is a component for controlling communications between the programmable display device 2 and the PLC 5. In a case where the PLC 5 is a model designed for serial communication, the interface 25 carries out serial communication-specific control. In a case where the PLC 5 is a model designed for network communication, the interface 25 carries out network communication-specific control. In a case where the interface 25 carries out the serial communication-specific control, the interface 25 carries out the communication with the use of a communications protocol which varies depending on a manufacturer or a model of the PLC 5.

The data memory 26 is SRAM or DRAM, and stores therein (i) data obtained from the PLC 5 and data generated by the programmable display device 2 and (ii) data obtained from external devices other than the PLC 5. Since the data memory 26 thus stores therein various types of data, the data memory 26 does not necessarily need to be a single memory. Rather, (i) the data memory 26 is preferably constituted by different types of memories for storing respective different types of data to be obtained or (ii), even in a case where the data memory 26 is a single memory, the data memory 26 is preferably divided into different types of storage regions for storing respective different types of data to be obtained.

Examples of the data obtained from the PLC 5 encompass sampling data and alarm data. Examples of the data generated by the programmable display device 2 encompass operation log data.

Sampling data is data which the PLC 5 obtains from each device 6. The sampling data is accumulated, in the data memory 26, along with data on its generated time.

Alarm data is data concerning an alarm confirmed in the PLC 5. The PLC 5 is configured so that, in a case where a malfunction etc. occurs, (i) an alarm bit provided in a predetermined bit device goes into a state (ON or OFF) indicative of the malfunction etc. or (ii) a value, at which to raise an alarm, is written into a predetermined word device. The alarm data is data which the control section 21 generates, based on states of such devices, along with data on date and time on/at which a content (message) of the alarm changes, in order for a user to be notified of the alarm going off.

Examples of the data to be obtained from external devices other than the PLC 5 encompass (i) data captured from external devices such as a thermoregulator, an inverter, and a bar code reader and (ii) data for controlling, such as the aforementioned recipe data to be transmitted from the host computer 3.

The user memory 27 (storing section) stores therein image data, the communications protocol, and the like. The user memory 27 is an FEPROM (Flash Erasable and Programmable ROM). FEPROM is a rewritable read-only flash memory, and therefore plays a role similar to a hard disk drive for use in any personal computer in general. Since a flash memory has no moving part and is impact-resistant, the flash memory reliably functions even in a harsh environment.

Each piece of image data is data of an image corresponding to 1 frame displayed by the programmable display device 2. Normally, a series of pieces of related image data, which concern the control system 1 or products manufactured by the control system 1, are grouped as a file and stored (saved) in the user memory 27.

Image data is created by graphics software. The image data includes (i) a base image and (ii) objects, such as a component representation and a graphical item, and/or texts which are superimposed on the base image.

Examples of the graphical item encompass dots, lines, triangles, quadrangles, and circles.

Examples of the component representation encompass representations of a switch (on/off switch, change-over switch, push-button switch etc.), a lamp, a numeric keypad, and various display representations (such as a numerical value display representation, a meter display representation, a graph display representation, and an alarm display representation), which representations are preinstalled in the graphics software. Each of the representations is assigned the aforementioned process-specifying information indicative of an operation for achieving a function of what is represented by the component representation. For example, the switch object is pre-assigned, by the graphics software, process-specifying information specifying a process of rewriting, in response to a touch on the switch object, a value of a bit device specified by a desired bit address from "0" to "1" or vice versa.

Note that examples of the objects contained in the image data include not only single-function objects (unit objects OBJ1 through OBJn described later) such as those described above, but also master objects capable of switching, according to states of certain variables (described later), and displaying such single-function objects. The master objects OBJ will be described later in detail.

The work memory 28 is a DRAM, for example, and is used for (i) computation for display control and (ii) temporary storage of data exchanged between the PLC 5 and the programmable display device 2.

The memory card interface 29 is a reader/writer for reading out and writing data from/into a memory card 8. A suitable example of the memory card 8 is a CF (registered trademark) card, which is a compact and yet mass storage memory card.

The control section 21 obtains, in a form of state data, a state of each device 6 connected to the PLC 5. The control section 21 obtains such state data (i) by communicating with the PLC 5 either at predetermined intervals or each time a prearranged event takes place and (ii) from the device memory (external device memory) of the PLC 5. The control section 21 then writes the state data thus obtained into a temporary memory space spared in the programmable display device 2, such as a particular region (state memory region) in the work memory 28. The control section 21 also causes the programmable display device 2 to display, on its screen, a state of the device 6 which state is indicated by data written into a data storage region spared in the programmable display device 2, such as a particular region (internal device memory) in the data memory 26.

On the other hand, in accordance with a manipulation on the touch panel 23 provided on the display section 22 of the programmable display device 2, the control section 21 overwrites data stored in the external device memory by communicating with the PLC 5. The control section 21 also overwrites data stored in the internal device memory in accordance with a manipulation on the touch panel 23.

The control section 21 specifies, by use of process-specifying information assigned to the respective component images, (i) a process of obtaining state data from the device 6 and reflecting the state data on how an object is displayed on an image and (ii) a process of instructing that a state of the device 6 be changed according to a manipulation of the object.

The control section 21 arranged as such is a function block realized by executing the aforementioned HMI control program with the use of the aforementioned CPU provided in the programmable display device 2.

A program code (executable program, intermediate code program, or source program) of the HMI control program can be recorded in a computer-readable recording medium configured so as to be separable from the programmable display device 2. The program code can also be installed from the recording medium into the programmable display device 2.

The storage medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM (Registered Trademark) /flash ROM.

Since the programmable display device 2 is connected to the network 4, the program code may be delivered to the programmable display device 2 via the network 4. The network 4 is not limited in any particular manner, and may be, for example, the Internet, an intranet, extranet, LAN, ISDN, VAN, CATV communications network, virtual dedicated network (virtual private network), telephone line network, mobile communications network, or satellite communications network. A transfer medium which makes up the network 4 is not limited in any particular manner, and may be, for example, wired line, such as IEEE 1394, USB, electric power line, cable TV line, telephone line, or ADSL line; or wireless, such as infrared radiation (IrDA, remote control), Bluetooth (Registered Trademark), 802.11 wireless, HDR, mobile telephone network, satellite line, or terrestrial digital network.

Note that the functions of the control section 21 can be achieved in a form of a computer data signal embedded in a carrier wave in which the program code is embodied electronically.

The control section 21 includes a state monitoring section 211 so that the aforementioned master object contained in image data causes the single-function objects (the unit objects OBJ1 through OBJn (n is any integer)) to be switched between according to a state of a certain variable.

The master object will be described below along with a description of the state monitoring section 211. Fig. 2 is a diagram illustrating a relationship between the state monitoring section 211 and the master object OBJ.

As illustrated in Fig. 2, the master object OBJ functions to collectively control a plurality of independent unit objects OBJ1 through OBJn, which are prepared in advance, such that the unit objects OBJ1 through OBJn are displayed while being switched between in accordance with states of variables that can be detected by the programmable display device 2. Note that a unit object refers to (i) a conventional object, such as a lamp or a switch, having a particular function or (ii) an object, having a particular function, in which a plurality of such conventional objects are grouped together. Note also that although properties of a unit object such as a color and line boldness are changeable, the unit object does not have a function to switch its own display, that is, a function to be displayed in an entirely different form. In order to achieve the function to collectively control the unit objects OBJ1 through OBJn, the master object OBJ includes a state managing section 101, a registration requesting section 102, a change determining section 103, a state-object managing section 104, and a display switching section 105.

Note that although, for convenience of description, separated according to their respective functions in Fig. 2, the master object OBJ and the unit objects OBJ1 through OBJn are integrally written by a program language.

The state managing section 101 includes a state managing list 101a which is a list (i) for determining particular ranges of a variable that correspond to the respective unit objects OBJ1 through OBJn and (ii) including at least one value to become a condition for switching between the unit objects OBJ1 through OBJn (e.g. a value of a zooming level as a variable (described later)). While the particular range is determined by at least one type of variables, the particular range can also be determined by a combination of a plurality of types of variables. For example, a temperature inside the device 6 and a temperature around the device 6 in combination can determine the particular range. When actually determining the particular range, it is possible to carry out an AND process or an OR process of ranges determined by the respective temperatures.

The state managing section 101 manages, in the state managing list 101a, a particular range of a variable as a particular state of the variable. In a case where a new variable and a particular range of the new variable is added to the master object OBJ, the state managing section 101 adds, to the state managing list 101a, (i) the new variable and (ii) values of the new variable at which value the unit objects OBJ1 through OBJn are switched between, that is, values at respective ends of the particular range. Specifically, the state managing section 101, based on values of variables managed in the state-object managing section 104, adds values of a variable to the state managing list 101a or updates the values of the variable managed in the state managing list 101a so that updating of associations between particular ranges and the unit objects OBJ1 through OBJn is reflected.

As described above, which one of the unit objects OBJ1 through OBJn is to be displayed is determined according to a particular range whose boundaries are determined by registered values. There are also cases where an additional object is to be displayed according to a particular range.

The registration requesting section 102 requests the state monitoring section 211 to register, of all the variables managed by the state managing list 101a, variables that need to be monitored.

When the state monitoring section 211 notifies the change determining section 103 of a change in a registered variable as a changed state of the registered variable, the change determining section 103 determines, by referring to the state managing list 101a, whether or not the variable has been changed to such an extent that the state of the variable is within a particular range. In a case where the change determining section 103 determines that a variable that is being monitored is situated within the particular range (i.e. the state of the variable is situated within the particular range), the change determining section 103 notifies the display switching section 105 of the state of the variable. The change determining section 103 thus determines, by collaborating with the state monitoring section 211, whether or not a variable has been changed to such an extent that a state of the variable is within a particular range.

The state-object managing section 104 includes a state-object associating list 104a which is a list for (i) associating a plurality of states of a variable with the respective unit objects OBJ1 through OBJn and (ii) managing the associations. The state-object managing section 104 manages, based on the state-object associating list 104a, associations between such states of a variable as being within particular ranges with the unit objects OBJ1 through OBJn. Alternatively, the state-object associating list 104a can individually associate particular ranges of a variable with the respective unit objects OBJ1 through OBJn.

In a case where a new variable that need to be monitored is added to the master object OBJ, the state-object managing section 104 adds, to the state-object associating list 104a, associations between such states of the new variable as being within particular ranges and the unit objects OBJ1 through OBJn. The state-object managing section 104 thus makes it possible to update associations between such states of variables as being within particular ranges and the unit objects OBJ1 through OBJn. A particular range is determined by adding, to the state-object associating list 104a, a value determining one end of the particular range or values determining both ends of the particular range.

The display switching section 105 switches, based on the particular range of the variable notified of by the change determining section 103, between displays of the unit objects OBJ1 through OBJn. Specifically, the display switching section 105 (i) selects, out of the unit objects OBJ1 through OBJn, a unit object OBJi (i = 1, 2, ..., n-1, or n) corresponding to the particular range by referring to the state-object associating list 104a, and (ii) switches display to the unit object OBJi.

The state monitoring section 211 (state monitoring section) registers and monitors the variable for which the registration requesting section 102 made a registration request. In a case where the variable changes, the state monitoring section 211 notifies of the change in the variable as a changed state. The state monitoring section 211 sends the notification directly to the master object OBJ (change determining section 103) without the use of a registration receiving section 211a as a relay member. In order to achieve such a bypassing function, the state monitoring section 211 includes, in addition to the registration receiving section 211a, a first monitoring section MTR1, a second monitoring section MTR2, ... an m^{th} monitoring section MTRm (m is any integer) (individual monitoring sections).

Upon receipt, from the state managing section 101, of a request for registration of the variable, the registration receiving section 211a (i) identifies the variable, and then (ii) requests a corresponding one of the first through m^{th} monitoring sections MTR1 through MTRm to register the variable. In other words, the registration receiving section 211a determines, based on the registration request, which one of the first through m^{th} monitoring sections MTR1 through MTRm is to monitor the variable for which the registration request was made. In a case where a registration request is made for a plurality of variables, an AND condition or an OR condition required for determining the particular range is also registered.

The first through m^{th} monitoring sections MTR1 through MTRm (i) register, upon receipt of respective registration requests made by the registration receiving section 211a, respective variables allocated thereto, and then (ii) monitor the respective variables thus registered. The first through m^{th} monitoring sections MTR1 through MTRm monitor changes in the respective variables by referring to information which can be obtained both from inside the programmable display device 2 and from outside the programmable display device 2. In a case where the respective variables change, the first through m^{th} monitoring sections MTR1 through MTRm directly notifies the change determining section 103 of a degree to which the respective variables changed.

Note that although the registration receiving section 211a is provided in the state monitoring section 211, it is also possible for the master object OBJ to have a function similar to that of the registration receiving section 211a instead.

Note also that although, as described above, an operation executed by the master object OBJ is specified in the master object OBJ itself (on a programmable display device 2's side), the operation can also be specified elsewhere. For example, in a case where the operation executed by the master object OBJ is specified in the host computer 3, functions of the respective sections 101 through 105 (object switching sections) included in the master object OBJ are specified in the aforementioned master object setting file saved in the host computer 3.

In such a case, the master object OBJ (i) receives, from the host computer 3, a request for registration of a variable, (ii) passes the registration request on to the state monitoring section 211, and then (iii) transmits, to the host computer 3, a notification from the state monitoring section 211 of a change in the variable. The master object OBJ switches, in response to a request for switching objects from the host computer 3, switches between the unit objects OBJ1 through OBJn. The master object OBJ includes the unit objects OBJ1 through OBJn as well as specifies a series of the operations.

Even in a case where an actual operation of the master object OBJ is thus specified in places other than the master object OBJ itself, display switching between the unit objects OBJ1 through OBJn can still be achieved by the master object OBJ.

Additionally, according to the above configuration, in which the operation of the master object OBJ is specified in the master object setting file saved in the host computer 3, it is possible to update the state-object associating list 104a on a host computer 3's side. This makes it easy to update associations between the unit objects OBJ1 through OBJn and a state of a variable, that is, such states of the variable as being within particular ranges.

Settings of the master object OBJ are modified by use of an application program such as a graphics program (aforementioned graphics software). This means that the programmable display device 2, which is a dedicated-purpose device unable to execute an application program, is incapable of modifying the settings of the master object OBJ. Thus, the host computer 3 is provided with such graphics software so that the settings of the master object OBJ can be modified.

A variable associated with the unit objects OBJ1 through OBJn will be described in detail below. A variable refers to a factor that is subject to some type of change, and (i) is a factor that is varied by internal or external cause or (ii) is by definition a factor that varies.

Examples of such a variable encompass the following factors 1) through 8), each of which needs to be detected and recognized by the programmable display device 2. The state managing list 101a contains particular ranges of such variables. In a case where (i) a variable is a zooming level as an example of an attribute of an object (see the factor 1) below) and (ii) the zooming level (degree) of an image reaches a certain value, a displayed object is switched from the unit object OBJ1 to the unit object OBJ2. In this case, this certain value, which is an end of a particular range, is contained in the state managing list 101a.

### 1) Attribute of Object

Examples of the attribute of an object encompass a location, size, display/hide, color, style, boldness, a label, and a zooming level of an object.

### 2) Value Obtained from External Device

Examples of a value obtained from an external device encompass data obtained from the device 6 and a value obtained from an I/O interface.

### 3) System Event

Examples of a system event encompass activation/confirmation/recovery of an alarm, execution of logging, execution/modification of a recipe, a communication error of the PLC 5, execution/termination of an application program, a storage malfunction, and occurrence of a user-requested event. The storage malfunction is a malfunction regarding the memory card 8, and examples of the storage malfunction encompass a reading/writing error, a format error, failure to install, and lack of storage capacity.

### 4) Acquisition of Information by External Communication

Examples of acquisition of information by external communication encompass access to a data base and an E-mail exchange.

### 5) Date and Time Information

Examples of date and time information encompass a date, elapsed time, and the time (the hour), which are to be managed by the programmable display device 2.

Elapsed time is, for example, a length of time, measurement of which is initiated at a time point at which a temperature around the device 6 exceeds a predetermined level.

### 6) Touching Action

Examples of touching action encompass tapping, flicking, and swiping.

### 7) Image Display Format

Examples of image display format encompass a vertical/horizontal orientation of the display section 22, the number of image segmentations, and display format in accordance with a size of a display panel of the display section 22. The image display format can also be that arranged by such a function as dynamic adjustment of object layout (e.g. Stack Panel, Dock Panel) which functions is used for a smartphone etc.

The Stack Panel is a technology for displaying an image such that image components are stacked together in an intended direction. With the Stack Panel, rotating a smartphone from a vertical position to a horizontal position causes a stacking orientation of the image components to be converted from vertical to horizontal, for example. In such an image conversion, (i) the image components are assigned respective numbers in order from an image component on top and (ii), even when the orientation is switched from vertical to horizontal, the image components are still arranged according to the numbers.

The Dock Panel is a technology for docking a plurality of image components together. With the Dock Panel, for example, it is possible to divide a displayed image so as to form a grid pattern (e.g. 2×2 division).

### 8) Theme

A theme is a display format of an object. For example, in a case where an object represents a switch, a rectangular switch is displayed by default, and, if a theme is changed to stereoscopic display, then a stereoscopically presented switch is displayed.

Although the above description discussed variables that correspond to the unit objects OBJ1 through OBJn, a variable need only be data or a value that can be inputted in the programmable display device 2, and is not limited to those described above.

Next, the following description will discuss a displaying operation of the master object OBJ of the programmable display device 2 configured as described above.

The displaying operation will be described below, based on an example in which a displayed image is zoomed in/out with a zooming level as a variable. Specifically, in this example, (i) zooming levels of "0" through "10" are preconfigured, (ii) the unit object OBJ1 is displayed in a case where the zooming level is in a particular range less than "5", (iii) a displayed object is switched from the unit object OBJ1 to the unit object OBJ2 in a case where the zooming level reaches "5", and (iv) display of the unit object OBJ2 is maintained in a case where the zooming level is beyond "5". Note that the zooming level "0" indicates a condition in which there is no magnification, and that the zooming level "10" indicates a condition in which the magnification is at a maximum.

First, the registration requesting section 102 requests the state monitoring section 211 to register the zooming level as a variable. The state monitoring section 211 then operates such that the registration receiving section 211a commands the first monitoring section MTR1, which plays a role of monitoring a zooming level, to register the zooming level. In response to the command, the first monitoring section MTR1 registers and monitors the zooming level.

In a case where an operation is executed to, for example, increase the zooming level from "1" to a higher number (zooming in), the first monitoring section MTR1 confirms a change in the zooming level, and then notifies the change determining section 103 of the change in the zooming level (new zooming level).

Upon receipt of the notification from the first monitoring section MTR1, the change determining section 103 compares the new zooming level with a zooming level ("5") managed by the state managing list 101a. In a case where the change determining section 103 determines that the zooming level has reached or exceeded the predetermined level ("5") (i.e. the variable has been in a state falling within a particular range), the change determining section 103 notifies the display switching section 105 of the particular range as the state falling within the particular range.

By referring to the state-object associating list 104a, the display switching section 105 then singles out, based on the particular range notified of from the change determining section 103, the unit objects OBJ2 as an object to which the displayed object is to be switched. Then, the display switching section 105 switches the displayed object from the unit object OBJ1 to the unit object OBJ2.

Next, the following description will discuss specific examples of a case where a zoomed-in image is displayed. A first specific example and a second specific example will be described below.

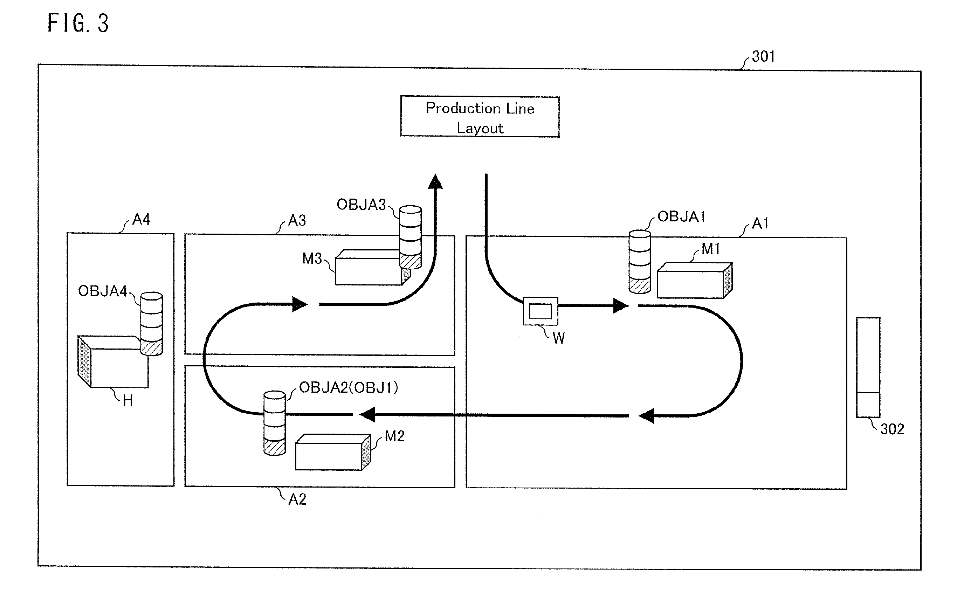

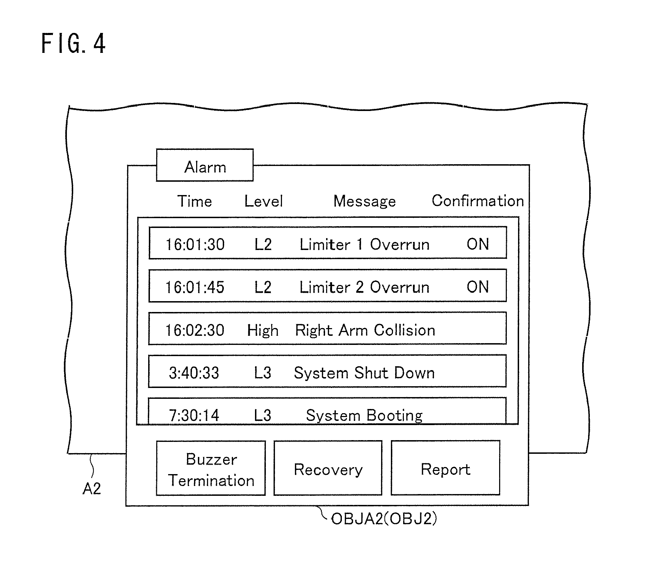

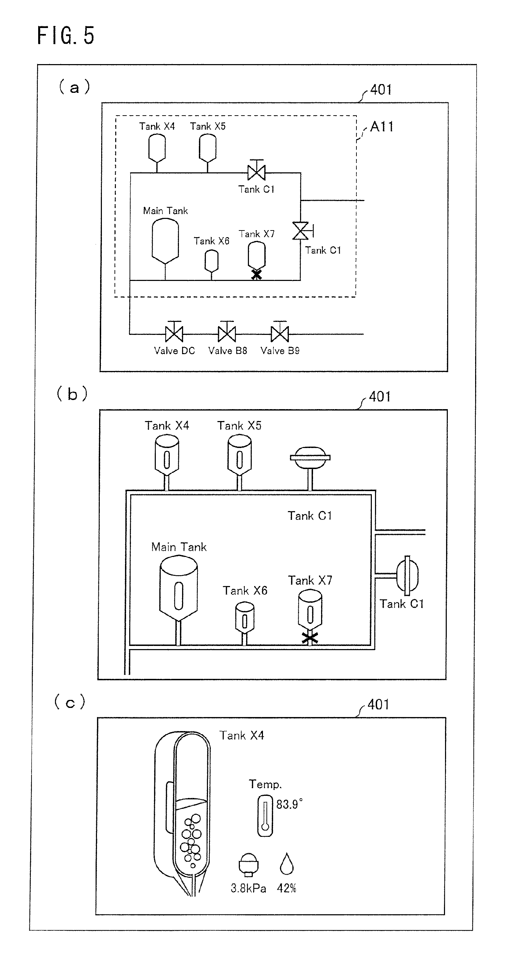

Fig. 3 is a view illustrating an image 301 presenting a layout of a production line. Fig. 4 is a view illustrating a state in which part of the image 301 has been enlarged to such a degree that an alarm display representation is displayed. (a) of Fig. 5 is a view illustrating an image 401 presenting an entire layout of plant equipment. (b) of Fig. 5 is a view illustrating a state in which part of the image 401 illustrated in (a) of Fig. 5 has been enlarged. (c) of Fig. 5 is a view illustrating a state in which part of the image 401 illustrated in (b) of Fig. 5 has been further enlarged.

First, in the first specific example, the programmable display device 2 displays the image 301 (see Fig. 3). The production line shown in the image 301 includes areas A1 through A4. The areas A1 through A3 are provided with, as objects, devices M1 through M3 and master objects OBJA1 through OBJA3, respectively. A processed article W is an object of an article progressively processed as the article proceeds through the areas A1 through A3. The area A4 is provided with a host computer H and a master object OBJA4. The host computer H can be one that corresponds to the aforementioned host computer 3.

The master objects OBJA1 through OBJA3 each include (i) a unit object of a signaling lamp representation and (ii) a unit object of an alarm display representation.

The signaling lamp representations represent respective working states of the devices M 1 through M3 and the host computer H with the use of red, yellow, and green colors. The red, yellow, and green colors indicate malfunctioning states of, stand-by states of, and the operating states of the devices M1 through M3 and the host computer H, respectively.

The alarm display representations display, by obtaining alarm data stored in the data memory 26, respective pieces of alarm information of the devices M1 through M3 and the host computer H. Examples of the alarm information encompass (i) activated date and time of an alarm, (ii) a level of the alarm, and (iii) a message of the alarm.

In a case where the zooming level of the image 301 is more than "0" and less than "5", the master objects OBJA1 through OBJA4 (i) determine that the zooming level is situated within a particular range and then (ii) display the respective signaling lamp representations (unit objects OBJ1). In a case where the zooming level of the image 301 is "5" or more, the master objects OBJA1 through OBJA4 (i) determine that the zooming level has been changed so as to be situated in another particular range and then (ii) display the respective alarm display representations (unit objects OBJ2).

The image 301 is provided, on its right end, with a zooming slider 302 for changing the zooming level. When the zooming slider 302 is in the lowest position, the zooming level is "0" (no zooming). When the zooming slider 302 is in the highest position, the zooming level is "10" (maximum zooming).

In other words, the state managing list 101a and the state-object associating list 104a contain at least the zooming level "5." Note that display switching from the signaling lamp representations to the alarm display representations does not need to be carried out all at the same zooming level throughout the master objects OBJA1 through OBJA4, but can be carried out at differing zooming levels in the respective master objects OBJA1 through OBJA4.

As illustrated in Fig. 3, the image 301 displays the entire layout of the production line while the zooming slider 302 is in the lowest position. Note that the master object OBJA2 of the area A2 as illustrated in Fig. 3 displays the signaling lamp representation as the unit object OBJ1.

In a case where, in the state illustrated in Fig. 3, (i) the area A2 is touched and (ii) the zooming slider 302 is moved from a lower position to a higher position, the area A2 becomes enlarged. It is possible to specify a to-be-enlarged part by, instead of the above touching action, moving the area A2 to a center part of the image 301 through scrolling an entire part of the image 301. Alternatively, it is also possible to make a pinch-out action (touching a screen with two fingers and then moving the fingers away from each other) so as to specify a to-be-enlarged part as well as actually enlarge the part.

In a case where the zooming level (variable) of the image 301 is changed as a result of a continuous manipulation of the zooming slider 302, the state monitoring section 211 notifies the change determining section 103 in the master object OBJA2 that the zooming level has been changed (notification of new zooming level). In a case where the change determining section 103 determines that the new zooming level has been changed from less than "5" to "5" or more and is maintained at such a zooming level, the change determining section 103 notifies the display switching section 105 that the new zooming level is "5" or more. Then, the display switching section 105 selects, from the state-object associating list 104a, an alarm display representation corresponding to the particular range including the zooming level of "5" or more.

This causes the master object OBJA2 to switch the display from the signaling lamp representation (unit object OBJ1) to the alarm display representation (unit object OBJ2) (see Fig. 4).

In the first specific example, the master object OBJA2 thus displays (i) a signaling lamp representation when there is no enlargement of an image and (ii) the alarm display representation, i.e., part of the signaling lamp representation, which part is lit red, when the zooming level is increased to "5" or more. This allows, in a case where the signaling lamp representation is lit red, the display to be switched to the alarm display representation by enlarging the image 301. Hence, it is possible to immediately be aware of alarm information on a malfunction of the device M2. The same principle applies to the master objects OBJA1, OBJA3, and OBJA4 of the areas A1, A3, and A4, respectively.

In the second specific example, the programmable display device 2 displays the image 401 containing the entire layout of the plant equipment while the zooming level (variable) is "0" (see (a) of Fig. 5). This image 401 contains, as master objects OBJ, (i) representations representing tanks and valves (tank representations and valve representations) and (ii) representations representing pipes (pipe representations) connecting the tanks and the valves.

In a case where (i) an area A11 is selected on the image 401 illustrated in (a) of Fig. 5 and (ii) a zooming level reaches "5" as a result of a manipulation of a zooming slider (not illustrated), the image 401 switches its display to an enlarged area A11 as illustrated in (b) of Fig. 5. On the image 401 of (b) of Fig. 5, the tank representations (unit objects OBJ2) in the area A11 are displayed so as to have appearances truer to those of actual ones than the tank representations (unit objects OBJ1) displayed on the image 401 of (a) of Fig. 5 do.

In a case where (i) a tank representation ("Tank X4") is selected on the image 401 of (b) of Fig. 5 and (ii) the zooming level reaches "10" (maximum zoom) by an enlargement manipulation, the image 401 switches its display to the tank representation thus selected as illustrated in (c) of Fig. 5. Not only does the tank representation (unit object OBJ3) displayed on the image 401 of (c) of Fig. 5 have an appearance truer to that of an actual one than the corresponding tank representation (unit object OBJ2) displayed on the image 401 of (b) of Fig. 5 does, but the image 401 of (c) of Fig. 5 also presents additional information such as that regarding temperature as well.

In the second specific example, the unit objects OBJ1 through OBJ3, which have differing display formats in accordance with their respective particular ranges, are thus switched between by the master object OBJ when the master object OBJ determines that the zooming level is changed so as to be situated in the respective particular ranges of the unit objects OBJ1 through OBJ3. This makes it possible to examine, in stages, a condition of the plant equipment. For instance, it is possible to examine the entire plant equipment first, then a part of it, and then a particular part of it etc.

Next, the following description will discuss an example in which a change in a work progress, which is a variable, is displayed on an image.

The above descriptions discussed the first and second specific examples, in each of which the unit objects OBJ1 through OBJn were switched between when the zooming level, as a variable, reaches a particular value. Note, however, that the unit objects OBJ1 through OBJn may be switched between with the use of different variables. For example, the aforementioned factor "2) value obtained from external device" or "3) system event" can be used as a variable.

In a case where the factor 2) is applied to the first specific example, a master object OBJ switches display from a signaling lamp representation to an alarm display representation when a value obtained from an external device is changed to a particular value. In a case where the factor 3) is applied to the first specific example, a master object OBJ switches display from a signaling lamp representation to an alarm display representation when an alarm (particular state) is generated as a system event (variable).

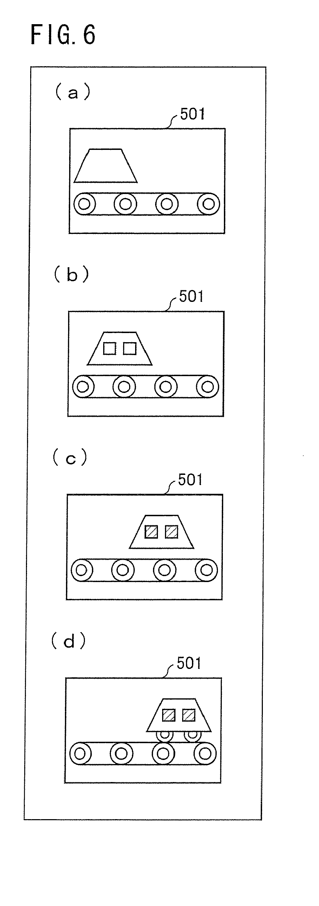

In a case where the factor 2) is applied to the second specific example, a master object OBJ switches display so that a unit object OBJi is enlarged when a value obtained from an external device is changed to a particular value. In a case where the factor 3) is applied to the second specific example, a master object OBJ switches its display so that a unit object OBJi is enlarged when an alarm is generated as a system event. For example, in a case where the value obtained from an external device is one related to an alarm of a Tank X4, an enlarged Tank X4 is displayed. In other words, the value obtained from the external device or the system event is used to select a particular master object OBJ and to select a unit object OBJi to which a master object OBJ is to switch its display.
(a) through (d) of Fig. 6 are views each illustrating an image 501 showing a work progress in a process for manufacturing an automobile.

In this example, the image 501 shows, as a master object OBJ, a representation representing the automobile. The master object OBJ includes unit objects OBJ1 through OBJ4 as representations representing respective states of the work progress in the manufacturing process.

First, as illustrated in (a) of Fig. 6, an image 501 which presents a step of assembling a frame is displayed. This image 501 shows a simplified exterior view of an automobile. This image 501 also shows that the frame is located at a left end of a conveyor belt.

Next, as illustrated in (b) of Fig. 6, an image 501 which presents a step of assembling an automobile body is displayed. This image 501 shows an exterior view of the automobile body attached to the frame. This image 501 also shows that the automobile body is located slightly to a right side from the left end of the conveyor belt.

Next, as illustrated in (c) of Fig. 6, an image 501 which presents a step of attaching doors is displayed. This image 501 shows windows of the automobile in a different display format from that used to show windows of the automobile body during the step of assembling the automobile body. This image 501 also shows that the automobile body is located further to the right side than it was during the step of assembling the automobile body.

Finally, as illustrated in (d) of Fig. 6, an image 501 which presents a final process is displayed. This image 501 shows an exterior view of a completed automobile. This image 501 also shows that the automobile is located at a right end of the conveyor belt.

In such an example in which the work progress in the process for manufacturing the automobile is displayed, the degree of work progress becomes greater as the automobile representation moves rightward. In response to such a change in the degree of work progress, display of the automobile representation (the master object OBJ) is switched to a different one on the image 501. The degree of work progress, that is, a particular range determining what unit object OBJi is to be displayed, is determined by (i) data obtained at the respective steps and stored in the PLC 5, (ii) a location (coordinates) of an actual automobile, (iii) data of the respective processes which data is saved on a database, or (iv) any combinations among (i) through (iii).

According to Embodiment 1, the programmable display device 2 includes the state monitoring section 211, and image data is provided with a master object OBJ, as described above. The state monitoring section 211 notifies the master object OBJ of a change in a preregistered variable as a result of monitoring by the state monitoring section 211, and then the master object OBJ displays, by referring to the state-object associating list 104a, a unit object OBJi corresponding to a changed state of the preregistered variable.

Hence, the master object OBJ having a plurality of unit objects OBJ1 through OBJn can be handled as a single object. This makes it possible to generate a dynamically changing image merely by associating a master object OBJ with (i) a variable based on which unit objects OBJ1 through OBJn are switched between, (ii) ranges of the variable (values specifying the ranges), and (iii) unit objects OBJ1 through OBJn corresponding to the respective ranges. Therefore, it is possible to (i) reduce the number of images required for displaying a dynamic image as well as (ii) decrease an amount of time required for generating the image.

The foregoing description can be rephrased as follows: For example, in a case where (i) a plurality of signaling lamp representations are placed on an overall image, (ii) each of the plurality of signaling lamp representations changes, according to a zooming level, representation to another display format, i.e., an alarm display representation, and (iii) the plurality of signaling lamp representations change to respective alarm display representations at different zooming levels, it was conventionally necessary to prepare a plurality of overall images for each of the different zooming levels. According to Embodiment 1, on the other hand, there is no such necessity, but it is only necessary to place a plurality of master objects OBJ on an overall image serving as a base image and to determine, for each of the plurality of master objects OBJ, a zooming level at which a display format is changed.

The master object OBJ causes, in response to a request from the state managing section 101, the state monitoring section 211 to register a variable. When the master object OBJ becomes notified of a monitoring result of the state monitoring section 211 which result indicates that the variable has been changed to be situated within a preregistered range, the display switching section 105 switches, by referring to the state-object associating list 104a, display to a unit object OBJi corresponding to the preregistered range.

Thus, of all the variables managed by the state managing section 101, only the variables that need to be monitored are registered, and are therefore designated as monitoring targets. The state managing section 101 also manages particular ranges of variables. In a case where there is an additional particular range due to an additional variable that is desired to be managed, various types of information including the additional particular ranges are added as a management module. This allows objects to be switched between based on the additional type of variable (particular range). The management module is determined, for example, by (i) a variable, (ii) a value of the variable which value determines a particular range, and (iii), if a plurality of variables are used, handling (AND process, OR process) of a plurality of ranges determined by the respective plurality of variables.

Since the state managing section 101 only manages variables (particular states), feature expansion is possible merely by adding new management modules without modifying an overall configuration. Also, the display switching section 105 manages objects themselves. Therefore, even in a case where new objects are to be supported, feature expansion is still possible merely by adding the new objects. While objects to be added are normally unit objects, master objects can also be added.

In contrast, with a conventional method for switching objects by use of a program, addition of a new variable necessitates redesigning a program or adding/changing entire image data.

Since the state monitoring section 211 has the registration receiving section 211a, just a request for registration of a variable made via the registration requesting section 102 by the state managing section 101 allows the registration receiving section 211a to command a corresponding one of the first through m^{th} monitoring sections MTR1 through MTRm to register the variable state. This makes it possible to accurately register and monitor a variable.

It is also possible for a master object OBJ to have a function similar to that of the registration receiving section 211a. However, a data size of a master object OBJ having such a function would be large. Thus, it is preferable that the registration receiving section 211a is provided in the state monitoring section 211.

Since the aforementioned graphics software is used to determine settings of variables, the graphics software can also be used to add variables and their ranges (values for determining the ranges). In order to simplify the user's adding process, it is also possible to allow a user to select from variables prepared in advance and their ranges. For example, in a case where a zooming level is designated as a variable, (i) three levels (small, medium, large) of zooming level ranges and objects corresponding to the respective zooming level ranges are prepared and (ii) a user is enabled to select, on a "setting" image, any of the zooming level ranges. Alternatively, it is also possible, in a case where variables are those relatively common and frequently used, to disable a user selection feature by permanently fixing the variables. It is thus possible to more easily determine settings of a variable as compared with the conventional art in which settings of a variable are determined by a program.

The following description will discuss achievable matters regarding various types of variables.

In a case where a zooming level of an image is manipulated (zooming in/out), it was conventionally necessary to prepare (i) various patterns of images to be switched between and (ii) images for associating between different objects. Also, in order to display details of objects when an image is enlarged, it was conventionally necessary to (a) take account of how detailed images to be displayed are and (b) prepare images corresponding to respective zooming levels.

In contrast, according to the present embodiment, in which a master object OBJ is placed on an image which can be zoomed in/out, mere manipulation for changing a zooming level of the image allows objects to be automatically switched between when the zooming level reaches a particular value, regardless of a display scale, that is, regardless of whether the entire image is displayed or part of the image is displayed. This makes it only necessary to prepare, without causing a user to be conscious of how detailed an image to be displayed is at every zooming level, a single image which allows all stages from an overall device (system) to its details to be displayed. As a result, it is possible to reduce (i) the number of images to be prepared and (ii) an amount of time it takes to produce images. A zooming operation can be carried out by either manipulating a component representation, such as a zooming slider or zooming buttons (+ and - buttons), provided on an image or making a clicking (tapping) action.

In a case where a certain displayed object is to be enlarged, such an object to be enlarged may be designated by a touching action or by changing a designation range with the use of a scroll view (mapping software) of a zooming panel.

By thus combining a master object OBJ and an image that can be zoomed in/out, it is possible to present, with the use of a single image, all stages from an overall device to its details.

In a case where a variable is data, it is possible that when a value of the data reaches (is situated at) a particular one (i.e. the data becomes that of a particular type), displayed unit objects are switched between. For example, in a case where a variable is recipe data, it is possible that, when a user specifies a particular type of recipe data, display is switched to a unit object presenting a final drawing of a product manufactured by use of the recipe data specified by the user. It is also possible that, when a value of data saved in the database connected to the programmable display device 2 becomes a particular one, display is switched to a unit object representing a drawing etc. relevant to the data.

In a case where a variable is some type of event, it is possible that, when the event is in a particular state (i.e. particular range), unit objects are switched between. For example, in a case where a variable is such an event as a state of communication between the programmable display device 2 and the PLC 5, a communication error is designated as a particular state for switching unit objects. This makes it possible to recognize a trouble if a communication error occurs, and then to switch display to (i) a unit object showing a location of the trouble or (ii) a unit object showing a recovery method.

The following description will discuss an example of a manipulation system (programmable display device 2) using a touch panel. Note that an object described below can be either a unit object or a master object, depending on its suitability for its intended purpose. In this manipulation system, in a case where a variable is such an event as a manipulation of the object, it is possible to switch between displayed objects when a particular manipulation (touching gesture) is made. For example, an ordering system can be configured so that, if an image of an item on a menu is provided as an object, then touching the object causes another object displayed next to the object thus touched to be switched to a different one. If such an object displayed next to the touched object is to be switched to an object for advertisements relevant to the item on the menu, then such an object for advertisements can be displayed together with the item on the menu.

In a case where a variable is a working state of a device, it is possible that, when the working state is in a state falling within a particular range, information regarding the state is displayed. For example, in a case where the particular range is a malfunction of the device, it is possible that, when a malfunction occurs in the device, display is switched to an object showing a location of the malfunction and a method for resolving the malfunction. Alternatively, it is also possible that, when a malfunction occurs in the device, an object showing a part with the malfunction is switched to an object showing a state of the malfunction.

In a case where a variable is a position of an object, it is possible that, when the object is moved to a particular position, displayed objects are switched between. For example, objects showing images are switched between according to a position of a slider. To be specific, it is possible to switch, according to a position of the slider, between a plurality of objects showing respective burning conditions of a piece of bread in a bread oven. Alternatively, adjustment of a position of the slider can be used for regulating a toasting condition of bread. It is also possible to switch, according to a position of the slider, between a plurality of objects showing respective images representing long and narrow balloons extended to different degrees.

In a case where a variable is a touching action, displayed objects are switched between in response to a particular touching action on the touch panel 23. For example, in a case where a Web browser is installed in a programmable display device 2, it is possible that (i) a Web image is normally displayed as an object and (ii), when the Web image is flicked, the Web image is switched to an image (different object) showing information on browsing history on the Internet. Alternatively, it is also possible that, when the Web image is flicked, the Web image is switched to an image (different object) of an Internet setting.

Furthermore, it is possible that, when a trend graph (object) is double-tapped, a graph covering a different range is displayed as a switched object. For example, such display is possible that (i) a graph covering a range of 0 to 100 is normally displayed and (ii) double-tapping switches the graph to another graph covering a range of 0 to 50.

In a case where a magnification of display is increased by double-tapping, mere enlargement of the display causes a font size to become excessively large and therefore difficult to look at. Thus, a type of object that restricts a font size to a certain degree can be displayed. This regulates the font size even when the display is enlarged, and consequently spares some blank space which is available for displaying a keyboard etc. for character input. Therefore, various images can be easily produced.

In a case where a variable is a layout of an image, displayed objects are switched between when the layout is a particular one. For example, in a case where an image is divided into three regions, it is possible that, when the number of the regions is switched to 2, a region in the middle is deleted. This expands the remaining regions, and therefore makes it possible to switch objects displayed on the respective regions to different ones. For example, such display can be achieved that (i) signaling lamp representations are displayed when an image is divided into three regions and (ii) alarm display representations are displayed when an image is divided into two regions.

This can be modified in such a manner that (i) widths of respective regions are variables and (ii) objects are switched to different ones when the widths become those obtained in a case where an image is divided into two regions. Alternatively, it is also possible that (i) the number of regions constituting an image is a variable and (ii) objects are switched to different ones when the number becomes 2.

In a case where a variable is date and time, displayed objects are switched between when date and time are particular ones. For example, it is possible to switch, after each predetermined time passes, (i) between objects showing respective images of toasting conditions of a piece of bread in a bread oven or (ii) between objects showing respective images of a deterioration process of a consumable part. Alternatively, it is also possible to (a) switch, according to the year, between objects showing respective images of the twelve zodiac signs, (b) switch, according to meteorological information obtained from the Internet, between objects showing respective weathers, and (c) switch, according to time, between objects showing respective images with respective different luminances.

In a case where a variable is an image display format, objects are switched between when the image display format becomes a particular one. For example, in a case of the aforementioned Stack Panel, such a switching action is possible that (i) objects of signaling lamp representations are displayed when the display section 22 is horizontally oriented and therefore a displaying space cannot be secured and (ii) objects of alarm display representations are displayed when the display section 22 is vertically oriented and therefore a displaying space can be secured.

In a case where (i) the aforementioned Dock Panel is employed and (ii) an image displayed by a display section 22 measuring a 320 × 240 size is to be displayed by a display section 22 measuring an 800 × 600 size instead, a size of each block (rectangular region) becomes large. Hence, the size of each block is designated as a variable, and objects are switched between when the size of each block reaches a particular value. This allows displayed objects, which are displayed as signaling lamp representations in a case where a size of a screen is small, to be switched, when the size of the screen becomes large, to objects of alarm display representations. A single image is thus displayed in different ways (shows different objects) depending on whether the image is displayed on a small programmable display device 2 or on a large programmable display device 2. This makes it possible to display an image fitting the size of the screen.

Although a variable is the size of each block in the foregoing case, a variable can also be a height of each block. This causes objects to be switched between when a height of a region, in which a master object OBJ is provided, reaches a particular value. In so doing, the state monitoring section 211 inquires the Dock Panel about the height of each block, and then the Dock Panel gives a response to the inquiry, based on the size of the screen. If the height of each block is equal to or greater than a predetermined value, the state monitoring section 211 passes such information on to the master object OBJ.

In a case where a master object OBJ is provided in one whole image unlike the case of Dock Panel in which an image is divided into regions, a display region becomes large when the image is displayed on a display section 22 having a large screen. Thus, objects can be switched between when the image is displayed on such a large display section 22.

Note that while a master object OBJ is normally provided as a part of a graphics software package, a master object OBJ can also be provided on the Internet. This makes it possible to, for example, download a master object OBJ to be used from a software distribution source such as an application store. In such a case, a master object OBJ is provided apart from graphics software, and it is therefore made possible to obtain the latest version of master object OBJ without having to wait for the latest version of graphics software to be released.

Note also that, as described above, what is herein referred to as a particular range can be defined as a value such as a temperature, or can be defined as a data type, an operation type, a display format, or a device state. Thus, any event that can be detected/recognized by the programmable display device 2, and, furthermore, any event that can be set in the programmable display device 2 can be a variable for which a particular range is to be specified. In other words, a particular range can have a predetermined varying amount or can be a fixed value. For example, a particular range is defined by one of certain values or certain types of data, or is defined by a certain operation.

Note that the programmable display device in accordance with Embodiments of the present invention can be described as follows:

The programmable display device includes: a storing section for storing therein image data which contains (i) a plurality of unit objects each of which has a particular function and (ii) a master object for collectively controlling the plurality of unit objects; and a state monitoring section for monitoring a change in a variable which is preregistered, the master object including: a registration requesting section for requesting the state monitoring section to register a variable to be monitored; a change determining section for determining whether or not a variable monitored by the state monitoring section has changed to be in a state falling within a particular range; and a display switching section for switching, when the change determining section determines that the variable has changed to be in the state falling within the particular range, a displayed unit object from one of the plurality of unit objects which is being displayed to another one of the plurality of unit objects that is associated with the state falling within the particular range.

According to the configuration, a registered variable is monitored by the state monitoring section. When the change determining section determines that the registered variable has changed to be in a state falling within a particular range, the display switching section switches, a displayed unit object from one of the unit objects which is being displayed to another one of the unit objects which is associated with the state falling within the particular range.

Hence, it is possible to handle a master object that can be switched between a plurality of unit objects as if it is a conventional single object. This makes it possible to create a dynamically changing image only by associating the master object with (i) states of each variable for switching between unit objects which states fall within respective particular ranges and (ii) unit objects corresponding to the respective particular ranges. Therefore, it is possible to reduce the number of images for displaying a dynamic image and to reduce an amount time required for generating an image.

It is preferable to configure the programmable display device such that: the master object further includes a state-object managing section for managing associations between (i) states of the variable falling within the respective particular ranges and (ii) the plurality of unit objects, respectively; the registration requesting section requests, by referring to the variable, the state monitoring section to register the variable; and the switching section switches, by referring to the associations managed by the state-object managing section, the displayed unit object from said one of the plurality of unit objects which is being displayed to said another one of the plurality of unit objects that is associated with the state falling within the particular range.

This makes it possible to monitor only variables which need to be monitored by registering only such variables of all of variables corresponding to particular ranges managed by the state-object managing section. The display switching section is capable of switching between unit objects only by referring to associations managed by the state-object managing section between (a) unit objects and (b) respective states falling within particular ranges.

It is preferable to configure the programmable display device such that the state-object managing section is capable of updating the associations managed by the state-object managing section.

According to the configuration, in a case where an additional particular range of a variable is desired to be managed, an association between (i) a state falling within the additional particular range and (ii) a unit object is to be added to the state-object managing section. This updates associations managed by the state-object managing section between (a) states falling within particular ranges and (b) respective unit objects. Hence, feature expansion can be achieved without altering an overall structure only by, adding an association between (I) a state falling within an additional particular range and (II) a unit object. It is therefore possible to easily support new unit objects and new variables.

It is preferable to configure the programmable display device such that: the state monitoring section includes: individual monitoring sections each for monitoring a change in a corresponding one of the variables; and a registration receiving section for determining, upon receipt of a request from the registration requesting section for registration of a variable, which of the individual monitoring sections is to register the variable; and the individual monitoring sections each directly notify the change determining section of the change in the corresponding one of the variables.

According to the configuration, a request made by the registration requesting section for registration of a variable is all that it takes for the registration receiving section to determine which of the individual monitoring sections is to register the variable. Then, an individual monitoring section, which registered the variable, directly notifies the change determining section of the change in the variable. This allows the state-managing section and the master object to operate in smooth coordination with each other.

A control program in accordance with an embodiment of the present invention is a control program for operating one of the above mentioned programmable display devices, and is a program for causing a computer to server as the state monitoring section.

With the configuration, it is possible, by interaction between the control program and the master object, to switch between unit objects for display as described above.

A control system in accordance with an embodiment of the present invention includes: one of the above mentioned programmable display devices; and an external device, communicably connected to the programmable display device, which generates a variable.

With the configuration, it is possible to switch between unit objects by recognizing not only a particular state of a variable generated in the programmable display device but also a particular state of a variable generated by an external device.

Alternatively, the control system in accordance with the embodiment includes: a host computer; and a programmable display device communicably connected to the host computer, the programmable display device including: a memory section for storing therein image data that contains (i) a plurality of unit objects each of which has a particular function and (ii) a master object for collectively controlling the plurality of unit objects; and a state monitoring section for monitoring a change in a variable which is preregistered, the master object causing an object switching section, which is provided in the programmable display device or in the host computer, to (a) determine whether or not the variable has changed to be in a state falling within a particular range and (b) switch, when determining that the variable has changed to be in the state falling within the particular range, a displayed unit object from one of the plurality of unit objects which is being displayed to another one of the plurality of unit objects that is associated with the state falling within the particular range.

According to the configuration, (i) the state monitoring section monitors a change in a registered variable and (ii) the master object is configured so that, when the registered variable has changed to be in a state falling within a particular state, the object switching section switches from a unit object which is being displayed to another unit object which is associated with the particular state.

This makes it possible to handle a master object having a plurality of unit objects differing in display size from one another as if it is a conventional single object. Therefore, an image in which the master object is enlarged or reduced in a dynamic way can be created only by associating the master object with (i) states of each variable for switching between unit objects which states fall within respective particular ranges and (ii) unit objects corresponding to the respective particular ranges. Therefore, it is possible to reduce the number of images for displaying a dynamic image and to reduce an amount time required for generating an image.

The master object thus switches, when a variable falls in a particular state, between a plurality of unit objects differing in display size from one another. This allows the programmable display device to easily carry out, according to a state of the variable, dynamic enlargement or reduction of an object.

In addition, the object switching section can be provided in the programmable display device or in the host computer. In a case where the object switching section is provided in the host computer, the master object utilizes the function of the object switching section via communication between the host computer and the programmable display device.

It is preferable to configure the control system such that: the object switching section includes: a range managing section for managing particular ranges of the variable; and a state-object managing section for managing associations between (i) states of the variable which fall within the respective particular ranges and (ii) the unit objects, respectively; the object switching section switches, by referring to the associations, the displayed unit object from said one of the plurality of unit objects which is being displayed to said another one of the plurality of unit objects that is associated with the state falling within the particular range; and the range managing section updates, according to an update on the associations managed by the state-object managing section, the particular ranges managed by the range managing section.

With the configuration, it is possible to monitor only variables which need to be monitored by registering ranges of such variables out of all the particular ranges managed by the state managing section. The object switching section is capable of switching between unit objects only by referring to associations managed by the state-object managing section between (a) unit objects and (b) respective states falling within particular ranges.

In a case where an additional particular range of a variable is desired to be managed, an association between (i) a state falling within the additional particular range and (ii) a unit object is to be added to the state-object managing section. This causes the additional particular range to be added to a list of particular ranges managed by the range managing section. Hence, feature expansion can be achieved without altering an overall structure only by adding an association between (I) a state falling within an additional particular range and (II) an unit object. It is therefore possible to easily support new unit objects and new variables.

Note that it is possible that (i) the object switching section is provided in the host computer and (ii) the range managing section updates particular ranges, which are managed by the range managing section, in accordance with an update on associations managed by the state-object managing section between (a) states falling within particular ranges and (b) respective unit objects.

This causes the host computer to update (i) the above associations and (ii) particular ranges managed by the state managing section. Therefore, the above updates can be easily made.

It is preferable to configure the control system such that the state monitoring section includes: a plurality of individual monitoring sections each for monitoring a change in a corresponding one of the variables; and a registration receiving section for determining, upon receipt of a request for registration of a variable; which of the plurality of individual monitoring sections is to register the variable, and the plurality of individual monitoring sections each directly notify the object switching section of the change in the corresponding one of the variables.

According to the configuration, it is only a request for registration of a variable that is required to cause the registration receiving section to determine which of the individual monitoring sections is to register the variable. Then, an individual monitoring section which registered the variable directly notifies the object switching section of a change in the variable. This allows the state-monitoring section and the master object to operate in smooth coordination with each other.

It is preferable to configure the control system such that the variable is a zooming level that is a degree to which an image displayed based on the image data is zoomed. Alternatively, it is preferable to configure the control system such that the variable is data obtained from an external device.

According to the configuration, since the variable is a zooming level, a unit object is switched to another unit object when the zooming level is changed to be in a particular state as a result of an operation to change the zooming level. This makes it possible to enlarge/reduce an image in a dynamic way by switching, according to the operation to change the zooming level, between unit objects differing in display size from one another.

Since the variable is data obtained from an external device, a unit object is switched to another unit object when, for example, data obtained from a PLC is changed to be in a particular state. This makes it possible to enlarge/reduce an image in a dynamic way by switching, according to the data, between unit objects differing in display size from one another.

The present invention is not limited to the description of the embodiments, but can be altered in many ways by a person skilled in the art within the scope of the claims. An embodiment derived from a proper combination of technical means disclosed in different embodiments is also encompassed in the technical scope of the present invention.

### Industrial Applicability

The present invention is suitable for (i) dynamic switching of an object on an image from one object to another and (ii) dynamic switching between enlargement and reduction of an object on an image.

### Reference Signs List

- 1: Control system
- 2: Programmable display device
- 4: Network
- 3: Host computer
- 5: PLC (external device)
- 21: Control section
- 27: User memory (storing section)
- 101: State managing section (range managing section)
- 101a: State managing list
- 102: Registration requesting section
- 103: Change determining section
- 104: State-object managing section
- 104a: State-object associating list
- 105: Display switching section
- 211: State monitoring section (state monitoring section)
- 211a: Registration receiving section
- 301: Image
- 401: Image
- 501: Image
- MTR1 through MTRm: First through m^{th} monitoring sections MTR1 through MTRm (individual monitoring section)
- OBJ: Master object
- OBJ1 through OBJn: Unit object

## Claims

1. A programmable display device comprising:
a storing section for storing therein image data which contains (i) a plurality of unit objects each of which has a particular function and (ii) a master object for collectively controlling the plurality of unit objects; and
a state monitoring section for monitoring a change in a variable which is preregistered,
the master object including:
a registration requesting section for requesting the state monitoring section to register a variable to be monitored;
a change determining section for determining whether or not a variable monitored by the state monitoring section has changed to be in a state falling within a particular range; and
a display switching section for switching, when the change determining section determines that the variable has changed to be in the state falling within the particular range, a displayed unit object from one of the plurality of unit objects which is being displayed to another one of the plurality of unit objects that is associated with the state falling within the particular range.

2. The programmable display device as set forth in claim 1, wherein:
the master object further includes a state-object managing section for managing associations between (i) states of the variable falling within the respective particular ranges and (ii) the plurality of unit objects, respectively;
the registration requesting section requests, by referring to the variable, the state monitoring section to register the variable; and
the switching section switches, by referring to the associations managed by the state-object managing section, the displayed unit object from said one of the plurality of unit objects which is being displayed to said another one of the plurality of unit objects that is associated with the state falling within the particular range.

3. The programmable display device as set forth in claim 2, wherein the state-object managing section is capable of updating the associations managed by the state-object managing section.

4. The programmable display device as set forth in claim 2, wherein:
the state monitoring section includes:
individual monitoring sections each for monitoring a change in a corresponding one of the variables; and
a registration receiving section for determining, upon receipt of a request from the registration requesting section for registration of a variable, which of the individual monitoring sections is to register the variable;
and
the individual monitoring sections each directly notify the change determining section of the change in the corresponding one of the variables.

5. A control program for operating the programmable display device as set forth in any one of claims 1 through 4, the control program causing a computer to serve as the state monitoring section.

6. A control system comprising:
the programmable display device as set forth in any one of claims 1 through 4; and
an external device, communicably connected to the programmable display device, which generates a variable.

7. A control system comprising:
a host computer; and
a programmable display device communicably connected to the host computer,
the programmable display device including:
a memory section for storing therein image data that contains (i) a plurality of unit objects each of which has a particular function and (ii) a master object for collectively controlling the plurality of unit objects; and
a state monitoring section for monitoring a change in a variable which is preregistered,
the master object causing an object switching section, which is provided in the programmable display device or in the host computer, to (a) determine whether or not the variable has changed to be in a state falling within a particular range and (b) switch, when determining that the variable has changed to be in the state falling within the particular range, a displayed unit object from one of the plurality of unit objects which is being displayed to another one of the plurality of unit objects that is associated with the state falling within the particular range.

8. The control system as set forth in claim 7, wherein:
the object switching section includes:
a range managing section for managing particular ranges of the variable; and
a state-object managing section for managing associations between (i) states of the variable which fall within the respective particular ranges and (ii) the unit objects, respectively;
the object switching section switches, by referring to the associations, the displayed unit object from said one of the plurality of unit objects which is being displayed to said another one of the plurality of unit objects that is associated with the state falling within the particular range; and
the range managing section updates, according to an update on the associations managed by the state-object managing section, the particular ranges managed by the range managing section.

9. The control system as set forth in claim 7 or 8, wherein:
the state monitoring section includes:
a plurality of individual monitoring sections each for monitoring a change in a corresponding one of the variables; and
a registration receiving section for determining, upon receipt of a request for registration of a variable, which of the plurality of individual monitoring sections is to register the variable; and
the plurality of individual monitoring sections each directly notify the object switching section of the change in the corresponding one of the variables.

10. The control system as set forth in any one of claims 7 through 9, wherein the variable is a zooming level that is a degree to which an image displayed based on the image data is zoomed.

11. The control system as set forth in any one of claims 7 through 9, wherein the variable is data obtained from an external device.
